Europäisches Patentamt

European Patent Office

Office européen des brevets

(11) Veröffentlichungsnummer: **0 417 423 A2**

## (12) EUROPÄISCHE PATENTANMELDUNG

(21) Anmeldenummer: 90113395.9

(22) Anmeldetag: 13.07.90

(51) Int. Cl.⁵: **G01P 3/44**

(30) Priorität: 15.09.89 DE 3930895

(43) Veröffentlichungstag der Anmeldung:
20.03.91 Patentblatt 91/12

(84) Benannte Vertragsstaaten:
**DE FR GB IT SE**

(71) Anmelder: **FATEC FAHRZEUGTECHNIK GmbH
Borsigstrasse 2
W-8755 Alzenau(DE)**

(72) Erfinder: **Oehler, Helmut, Dipl.-Ing.
Thüringerstrasse 10
W-8751 Stockstadt(DE)**
Erfinder: **März, Uwe, Dipl.-Ing.
Sachsenhausener Strasse 13
W-6231 Schwalbach/Ts.(DE)**

(74) Vertreter: **Klein, Thomas, Dipl.-Ing. (FH) et al
Sodener Strasse 9 Postfach 6140
W-6231 Schwalbach a. Ts.(DE)**

(54) Schaltung zur Ermittlung der Drehzahl eines Rades.

(57) Es wird eine Schaltung zur Ermittlung der Drehzahl eines Rades mit einem induktiven Geber (1) angegeben, dessen Ausgang mit einer Impulsformereinrichtung (7) verbunden ist, deren Ausgang mit einer Auswerteeinrichtung verbunden ist. Der induktive Geber (1) ist mit Hilfe einer Leitung (6) mit einer Auswerteschaltung (11) verbunden. Die Auswerteschaltung (11) soll einerseits sicherstellen, daß das Ausgangssignal des induktiven Gebers (1) ausgewertet werden kann, andererseits soll sie in der Lage sein, Fehler, die beispielsweise durch einen Abriß der Leitung (6) auftreten können, trotz Vorhandensein von Schmutzwiderständen ($R_S$) zu erkennen. Dazu ist eine Hilfseinrichtung (10) vorgesehen, die den Innenwiderstand der Impulsformereinrichtung (7) geschwindigkeitsabhängig verändert.

Fig.1

EP 0 417 423 A2

## SCHALTUNG ZUR ERMITTLUNG DER DREHZAHL EINES RADES

Die Erfindung betrifft eine Schaltung zur Ermittlung der Drehzahl eines Rades mit einem induktiven Geber, dessen Ausgang mit einer Impulsformereinrichtung verbunden ist, deren Ausgang mit einer Auswerteeinrichtung verbunden ist.

In Kraftfahrzeugen kann es, beispielsweise für ein Anti-Blockier-System, notwendig werden, die Radgeschwindigkeit oder die Drehzahl eines Rades zu erfassen. Dazu werden induktive Geber verwendet, in denen durch einen sich periodisch ändernden magnetischen Leitwert, beispielsweise ein konzentrisch zum Rad angeordneter und sich mit dem Rad synchron drehender Zahnkranz, eine sinusähnliche Spannung induziert wird, deren Frequenz der Drehzanl des Rades proportional ist. Die annähernd sinusförmige Spannung wird durch eine nachgeschaltete Elektronik weiterverarbeitet, die aus der Spannung eine Folge von Rechteckimpulsen erzeugt. Aus dem zeitlichen Abstand von bestimmten Größen der Rechteckimpulse, beispielsweise der steigenden Flanken, läßt sich mit Hilfe einer digitalen Verarbeitungseinrichtung eine Aussage über die Drehzahl des betreffenden Rades gewinnen. Da die in induktiven Gebern erzeugte Spannung proportional zur Anderung des Magnetfeldes über der Zeit ist, ist die Ausgangsspannung eines induktiven Gebers sehr stark von der Frequenz abhängig. Je höher die Frequenz ist, desto größer ist die Amplitude des Ausgangssignals.

Da die induktiven Geber unmittelbar am Rad angeordnet sein müssen, sind sie in verstärktem Maße Umwelteinflüssen ausgesetzt. Sie werden durch Straßendreck und Feuchtigkeit verschmutzt und durch Erschütterungen mechanisch stark belastet. Die Erschütterungen können beispielsweise den Abstand des Gebers vom Zahnkranz ändern oder zum Abriß einer elektrischen Leitung führen. Die Auswertung der durch den induktiven Geber erzeugten Spannung erfolgt in der Regel nicht unmittelbar am Rad, sondern in einer zentralen Auswerteeinrichtung, zu der die Spannung mit Hilfe von elektrischen Leitungen übertragen wird. Durch die Verschmutzung kann es zu sogenannten Schmutzwiderständen kommen, die eine Kriechstromstrecke zwischen den beiden Adern einer Leitung bilden. Die Schmutzwiderstände erschweren die Fehler-Diagnose, die auf irgendeine Art und Weise den Spannungsabfall über den ohmschen Innenwiderstand des induktiven Gebers auswertet. Dieser entsteht, wenn auf den Geber ein Gleichstrom eingeprägt wird. Der Spannungsabfall verringert dann die Empfindlichkeit der Impulsformerschaltung erheblich, wenn keine Abkopplung des Gleichpotentials am Sensor von dem an der Impulsformereinrichtung erfolgt.

Es ist die Aufgabe der vorliegenden Erfindung, eine Schaltung anzugeben, die einerseits auch bei langsamen Radgeschwindigkeiten ausreichend empfindlich reagieren kann, andererseits aber auch Fehler genau genug erfassen kann.

Diese Aufgabe wird bei einer Schaltung der eingangs genannten Art dadurch gelöst, daß eine Hilfseinrichtung vorgesehen ist, die den Innenwiderstand der Impulsformereinrichtung geschwindigkeitsabhängig verändert.

Dadurch ist es möglich, bei höheren Geschwindigkeiten, d.h. wenn das Ausgangssignal des induktiven Gebers eine größere Amplitude aufweist, eine Kontrolle der Anordnung auf Leitungsunterbrechungen durchzuführen. Die Schmutzwiderstände, die normalerweise einen geschlossenen Stromkreislauf erzeugen und damit eine intakte Leitung vortäuschen, können dann mit hoher Sicherheit erkannt werden. Umgekehrt wird bei einer kleineren Geschwindigkeit, d.h. wenn die Amplitude der Ausgangsspannung des induktiven Gebers niedrig ist, der Innenwiderstand verändert und damit die Empfindlichkeit der Impulsformereinrichtung heraufgesetzt. Dann ist zwar keine Erkennung der Schmutzwiderstände möglich. Diese Erkennung muß aber nicht permanent erfolgen.

Mit Vorteil wertet die Hilfseinrichtung die Amplitude einer am Ausgang des induktiven Gebers anliegenden Ausgangsspannung aus. Wie eingangs ausgeführt, ist die Amplitude ein Maß für die Drehzanl des Rades. Je höher die Drehzahl des Rades ist, desto größer ist die Amplitude der Ausgangsspannung. Auch wenn hier kein linearer Zusammenhang vorliegt, reicht die Auswertung der Höhe der Amplitude aus, um den Innenwiderstand und damit die Empfindlichkeit der Impulsformereinrichtung ausreichend stark zu beeinflussen.

Die Hilfseinrichtung kann auch die Frequenz der Ausgangsspannung auswerten. Die Frequenz ist direkt der Geschwindigkeit proportional. Insbesondere, wenn Frequenz und Spannung zusammen ausgewertet werden, lassen sich Aufschlüsse über möglicherweise vorhandene Schmutzwiderstände und andere Strömungen, wie bleibende Veränderungen des Luftspalts im Geber, ziehen.

Vorteilhafterweise verändert die Hilfseinrichtung einen Eingangswiderstand der Impulsformereinrichtung. Der Eingriff in den Innenwiderstand der Impulsformereinrichtung ist am Eingang am einfachsten. Die übrige Impulsformereinrichtung kann dann unverändert belassen werden.

In einer bevorzugten Ausführungsform weist die Impulsformereinrichtung einen als Schmitt-Trigger beschalteten Komparator auf und der Eingangswiderstand beeinflußt die Höhe der am Komparator anliegenden Spannung.

In einer bevorzugten Ausführungsform weist die Hilfseinrichtung ein Schaltelement auf, das bei Überschreiten einer vorbestimmten Drehzahl des Rades dem Eingangswiderstand der Impulsformereinrichtung einen Parallelwiderstand parallel schaltet. Damit ergibt sich ein höherer Spannungsabfall über den ohmschen Innenwiderstand des induktiven Gebers. Die Spannung, die am Komparator anliegt, wird dadurch abgesenkt. Damit ist es möglich durch Zuschalten des Parallelwiderstandes sowohl die Leitung zum induktiven Geber auf Unterbrechung als auch die korrekte Funktion des induktiven Gebers, beispielsweise den richtigen Abstand des Gebers von dem Zahnkranz, zu überprüfen.

Mit Vorteil ist das Schaltelement als Transistor ausgebildet. Damit läßt sich die ganze Schaltung ohne mechanische Elemente ausführen.

In einer bevorzugten Ausführungsform weist die Hilfseinrichtung einen Mikroprozessor auf. Der Mikroprozessor kann gleichzeitig dafür verwendet werden, die von der Impulsformereinrichtung abgegebenen Impulse in die Drehzähl des Rades umzuwandeln. Nachdem damit bereits eine Information über die Drehzähl des Rades zur Verfügung steht, läßt sich der Mikroprozessor mit Vorteil auch für die Steuerung des Schaltelements der Hilfseinrichtung verwenden.

Die Erfindung wird im folgenden anhand eines bevorzugten Ausführungsbeispiels in Verbindung mit der Zeichnung beschrieben. Darin zeigen:

Fig. 1 eine Schaltungsanordnung und

Fig. 2 einen schematisch dargestellten Spannungsverlauf.

Ein Impulsgeber 1 weist einen Zahnkranz 2 auf, der an einem mit einem Magneten 3 verbundenen Kern 4 vorbeiläuft, wenn sich ein nicht dargestelltes Rad dreht. Um den Kern 4 ist eine Spule 5 gewickelt. Beim Vorbeilaufen der Zähne des Zahnkranzes 2 am Kern 4 ändert sich der magnetische Leitwert des magnetischen Kreises und damit der durch den Magneten 3 im Kern 4 erzeugte magnetische Fluß. Die Änderung des magnetischen Flusses induziert in der Spule einen Strom, der an einem Widerstand $R_A$ eine Spannung erzeugt. Diese Sapnnung wird über eine zweiadrige Leitung 6 einer Auswerteeinrichtung 11 zugeführt. Zwischen den Anschlüssen der Leitung 6 können sich durch Schmutzablagerungen an der Oberfläche soge nannte "Schmutzwiderstände", also Kriechstromstrecken, bilden. Ein solcher Schmutzwiderstand ist als Widerstand $R_S$ gestrichelt eingezeichnet. Ein solcher Schmutzwiderstand $R_S$ erschwert es der Auswerteeinrichtung 11, zu erkennen, ob die Leitung 6 abgerissen worden ist oder nicht. Auch wenn die Leitung 6 abgerissen ist, d.h. elektrisch unterbrochen ist, läßt sich über den Widerstand $R_S$ immer noch ein Strom von einer Ader zu anderen Ader der Leitung 6 leiten.

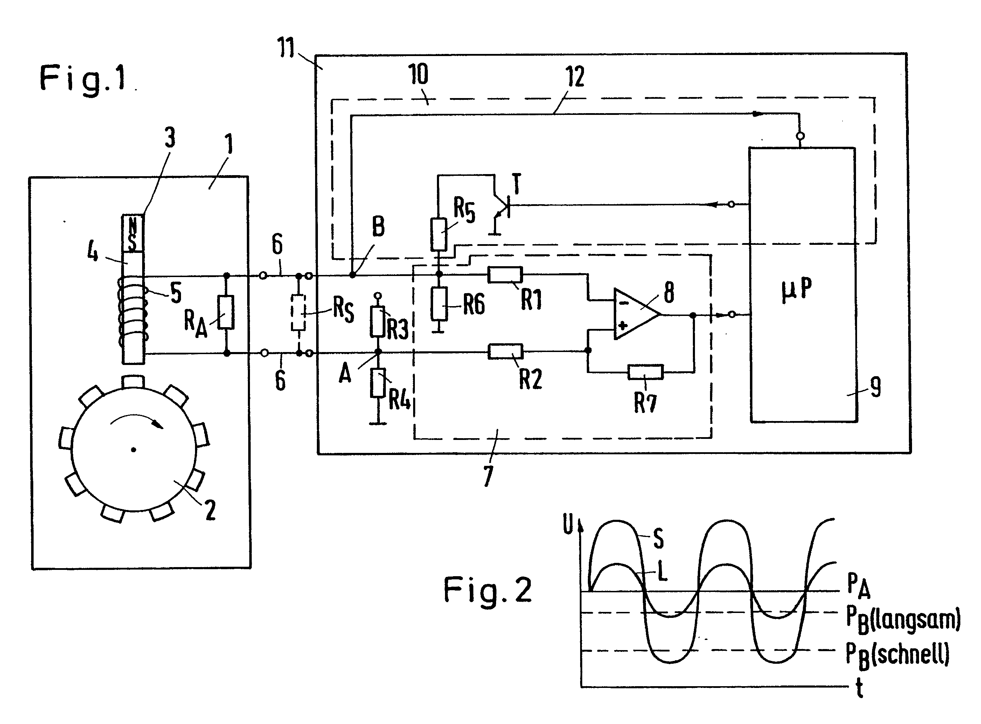

Die Auswerteeinrichtung 11 weist eine Impulsformereinrichtung 7 auf, die aus der im wesentlichen sinusförmigen Ausgangsspannung des induktiven Gebers 1, die über die Leitung 6 der Auswerteeinrichtung 11 zugeführt wird, einen Impulszug macht, der einem Mikroprozessor 9 zugeführt wird. Die Auswerteeinrichtung 7 weist einen als Schmitt-Trigger beschalteten Komparator 8 auf. Der nicht invertierende Eingang des Komparators 8 ist über einen Widerstand R2 auf ein durch einen Spannungsteiler R3/R4 am Punkt A gebildetes Potential $P_A$ gelegt. Weiterhin ist der nicht invertierende Eingang des Komparators 8 über einen Widerstand R7 mit dem Ausgang des Komparators verbunden. Der invertierende Eingang des Komparators 8 ist über einen Widerstand R1 an ein Potential $P_B$ gelegt, das sich in Abhängigkeit von der vom induktiven Geber 1 erzeugten Spannung und von einem Widerstand R6 im wesentlichen sinusförmig ändert (siehe Fig. 2).

Das Potential $P_B$ wird über eine Leitung 12 auch dem Mikroprozessor 9 zugeführt. Dieser wertet die Spannung am Punkt B aus, ermittelt also beispielsweise die Amplitude oder die Frequenz der Spannung. Beide Größen geben Aufschluß über die Umdrehungszanl des Zähnkranzes 2 und damit über die Umdrehungszahl des Rades, die ermittelt werden soll. Um bei Vorhandensein eventueller Schmutzwiderstände $R_S$ an den Anschlüssen des induktiven Gebers einen Abriß der Leitung 6 erkennen zu können, wird bei Frequenzen oder Amplituden oberhalb eines vorbestimmten Schwellwertes mittels eines als Transistor T ausgebildeten analogen Schalters ein Widerstand R5 parallel zum hochohmigeren Widerstand R6 geschaltet. Damit wird der Innenwiderstand der Impulsformereinrichtung vermindert und ihre "Empfindlichkeit" herabgesetzt. Der dann höhere Spannungsabfall über den ohmschen Innenwiderstand des induktiven Gebers 1 bleibt bei sonst korrekter Funktion des induktiven Gebers 1, z.B. richtiger Abstand des Kerns 4 zum Zahnkranz 2, keine Kurzschlüsse oder Unterbrechungen, ohne Auswirkung auf das Ausgangssignal des Komparators 8. Somit ist es möglich, durch Zuschalten des Widerstandes R5 die "Empfindlichkeit" des Komparators herabzusetzen.

Fig. 2 zeigt zwei vom induktiven Geber 1 erzeugte Spannungen, nämlich einmal die Spannung 5, die bei einer schnellen Radgeschwindigkeit, d.h. einer hohen Umdrehungszahl, erzeugt wird, und die Spannung L, die bei einer langsamen Radgeschwindigkeit, d.h. einer niedrigen Umdrehungszähl des Rades erzeugt wird. Würde man die Vergleichsspannung des Komparators 8 auch bei langsamen Geschwindigkeiten unverändert belassen, würde der Komparator bei niedrigen Umdrehungszahlen keine Impulse mehr erzeugen. Würde man andererseits die niedrige Vergleichsspannung auch bei hohen Geschwindigkeiten des Rades konstant lassen, hätte man keine Möglichkeit mehr, zu überprüfen, ob der induktive Geber 1 noch korrekt arbeitet oder überhaupt noch angeschlossen ist.

**Ansprüche**

1. Schaltung zur Ermittlung der Drehzahl eines Rades mit einem induktiven Geber, dessen Ausgang mit einer Impulsformereinrichtung verbunden ist, deren Ausgang mit einer Auswerteeinrichtung verbunden ist, dadurch gekennzeichnet, daß eine Hilfseinrichtung (10) vorgesehen ist, die den Innenwiderstand der Impulsformereinrichtung (7) geschwindigkeitsabhängig verändert.

2. Schaltung nach Anspruch 1, dadurch gekennzeichnet, daß die Hilfseinrichtung (7) die Amplitude einer am Ausgang des induktiven Gebers (1) anliegenden Ausgangsspannung auswertet.

3. Schaltung nach Anspruch 1 oder 2, dadurch gekennzeichnet, daß die Hilfseinrichtung (10) die Frequenz der Ausgangsspannung auswertet.

4. Schaltung nach einem der Ansprüche 1 bis 3, dadurch gekennzeichnet, daß die Hilfseinrichtung (10) einen Eingangswiderstand (R5, R6) der Impulsformereinrichtung (7) verändert.

5. Schaltung nach einem der Ansprüche 1 bis 4, dadurch gekennzeichnet, daß die Impulsformereinrichtung (7) einen als Schmitt-Trigger beschalteten Komparator (8) aufweist und der Eingangswiderstand (R5, R6) die Höhe der am Komparator anliegenden Spannung beeinflußt.

6. Schaltung nach Anspruch 5, dadurch gekennzeichnet, daß die Hilfseinrichtung (10) ein Schaltelement (T) aufweist, das bei Überschreiten einer vorbestimmten Drehzahl des Rades dem Eingangswiderstand (R6) der Impulsformereinrichtung (7) einen Parallelwiderstand (R5) parallel schaltet.

7. Schaltung nach Anspruch 6, dadurch gekennzeichnet, daß das Schaltelement (T) als Transistor ausgebildet ist.

8. Schaltung nach einem der Ansprüche 1 bis 7, dadurch gekennzeichnet, daß die Hilfseinrichtung (10) einen Mikroprozessor (9) aufweist.

# Fig.1

# Fig.2

EP 0 417 423 A2